# EUROPÄISCHE PATENTANMELDUNG

(11) **EP 4 324 685 A1**
(43) Veröffentlichungstag der Anmeldung: **21.02.2024**
(21) Anmeldenummer: 22190406.3
(22) Anmeldetag: 15.08.2022
(51) Int. Cl.: B60L 53/16, B60L 53/35

(54) **STECKVORRICHTUNG, STECKSYSTEM MIT EINER STECKVORRICHTUNG, SOWIE ROBOTER MIT EINER STECKVORRICHTUNG**

(71) Anmelder: IMS Gear SE & Co. KGaA, 78166 Donaueschingen (DE)
(72) Erfinder: Mittelbach, Marcel, 79859 Schluchsee (DE)
(74) Vertreter: Westphal, Mussgnug & Partner Patentanwälte mbB

(57) **Zusammenfassung**

Steckvorrichtung (10) mit folgenden Merkmalen:
• einer Steckeinheit (12) umfassend
∘ ein erstes Steckelement (14) mit einer Steckachse (16) und einer Steckrichtung (18),
omindestens ein erstes Ausrichtelement (20),

• ein Lagermodul (28) umfassend
∘ eine erste Lagereinheit(30), mittels der die Steckeinheit (12) um eine erste Achse (32) drehbar und entlang der ersten Achse (32) verschiebbar gelagert ist,
∘ eine zweite Lagereinheit (34), mittels der die Steckeinheit (12) um eine zweite Achse (36) drehbar und entlang der zweiten Achse (36) verschiebbar gelagert ist,
sowie
∘ eine dritte Lagereinheit (38), mittels der die Steckeinheit (12) um eine dritte Achse (40) drehbar gelagert ist,

sowie Stecksystem mit einer Steckvorrichtung (10) und Roboter mit einer Steckvorrichtung (10).

## Beschreibung

Die Erfindung betrifft eine Steckvorrichtung, ein Stecksystem mit einer Steckvorrichtung, sowie einen Roboter mit einer Steckvorrichtung.

Das zunehmende Bestreben, bislang manuell durchgeführte Tätigkeiten auch außerhalb des industriellen Umfelds zu automatisieren, erfordert auch auf der Ebene der beteiligten Komponenten Lösungen, die eine solche Automatisierung ermöglichen.

Zum Laden von elektrisch betriebenen Fahrzeugen sind sowohl konduktive als auch induktive Systeme bekannt. Während induktive Systeme ein kontaktloses Laden ermöglichen, erfordert das konduktive Laden das Verbinden des Fahrzeugs mit einem Kabel. Induktive Systeme können aus Sicht eines Nutzers deshalb eine einfache Art des Ladens darstellen. Im Vergleich zu konduktiven Systemen weisen sie jedoch deutlich höhere Übertragungsverluste auf. Daher gibt es Bestrebungen, das konduktive Laden für den Nutzer einfacher zu gestalten, und das Verbinden des Fahrzeugs mit dem Kabel, das bislang manuell erfolgt, zu automatisieren.

Dafür werden insbesondere Roboter verwendet, die sich mit dem Ladestecker autonom unter das Fahrzeug bewegen, dort eine unter dem Fahrzeug angeordnete Ladebuchse auffinden und den Ladestecker im Wesentlichen vertikal in die Ladebuchse einführen (sog. ACDU-System, ACDU für "Automatic Connection Device Underbody"). Ebenso sind robotergestützte Systeme bekannt, die, bei seitlich am Fahrzeug angeordneter Ladebuchse, die den Ladestecker im Wesentlichen horizontal autonom in die Ladebuchse einführen (sog. ACDS-System, ACDS für "Automatic Connection Device Side").

Beiden Systemen gemein ist, dass aufwändige Sensortechnik eingesetzt werden muss, um den Ladestecker möglichst genau gegenüber der Ladebuchse zu platzieren und einzuführen, nicht zuletzt deshalb, weil die verwendeten standardisierten Stecker häufig sehr empfindlich gegen insbesondere winkligen Versatz bei Steckvorgang sind. So können bereits wenige Grad Versatz zu einer hohen Abnutzung der Kontaktpins führen.

Um eine möglichst genaue Positionierung des Steckers zu erreichen, werden daher häufig hoch genaue LiDAR-Sensoren zur Positionierung des Steckers durch den Roboter eingesetzt. Nachteilig an dieser Lösung ist, dass derartige Sensorik sehr teuer ist. Außerdem sind solche Sensorsystem häufig schmutzempfindlich.

Darüber hinaus ist der Lösungsansatz bekannt, das Steckergesicht des Ladesteckers so zu verändern, dass der Ladestecker unempfindlicher gegen Versatz ist, sodass ein System mit einer geringeren Positioniergenauigkeit und kostengünstigerer Sensorik verwendet werden kann. Nachteilig daran ist, dass die bereits zertifizierten und standardisierten Ladestecker nicht verwendet werden können.

Der Erfindung liegt daher die Aufgabe zugrunde, eine Vorrichtung bereitzustellen, die die genaue Positionierung eines Steckers ermöglicht, kostengünstig herstellbar und unempfindlich gegenüber äußeren Einflüssen ist.

Die Aufgabe wird erfindungsgemäß gelöst durch eine Steckvorrichtung mit den Merkmalen des Patentanspruchs 1, einem Stecksystem mit den Merkmalen des Anspruchs 14 sowie einem Roboter mit den Merkmalen des Patentanspruchs 15.

Vorteilhafte Ausgestaltungen und Weiterbildungen der Erfindung sind in den abhängigen Ansprüchen angegeben.

Eine erfindungsgemäße Steckvorrichtung umfasst eine Steckeinheit, die ein erstes Steckelement mit einer Steckachse und einer Steckrichtung sowie mindestens ein erstes Ausrichtelement aufweist. Die Steckrichtung beschreibt vorzugsweise die Richtung der Steckachse, in die das erste Steckelement zum Stecken, also zum Herstellen einer Verbindung mit einem zweiten Steckelement, bewegt wird. Erfindungsgemäß weist die Steckvorrichtung ferner ein Lagermodul auf, umfassend eine erste Lagereinheit, mittels der die Steckeinheit um eine erste Achse drehbar und entlang der ersten Achse verschiebbar gelagert ist, eine zweite Lagereinheit, mittels der die Steckeinheit um eine zweite Achse drehbar und entlang der zweiten Achse verschiebbar gelagert ist, sowie eine dritte Lagereinheit, mittels der die Steckeinheit um eine dritte Achse drehbar gelagert ist. Vorzugsweise ist die Steckeinheit um die dritte Achse ausschließlich drehbar gelagert.

Durch eine derartige Lagerung kann die Steckeinheit sehr flexibel bewegbar angeordnet sein. Dadurch kann die Steckeinheit von dem mindestens einen ersten Ausrichtelement leicht in der für einen Steckvorgang erforderlichen Weise translatorisch und rotatorisch ausgerichtet werden, sodass die für das erste Steckelement erforderlichen Toleranzen beim Steckvorgang eingehalten werden. Dafür ist vorzugsweise das mindestens eine erste Ausrichtelement unbeweglich mit dem ersten Steckelement verbunden. Besonders bevorzugt weist die Steckeinheit einen Grundkörper auf, an dem das erste Steckelement und das mindestens eine erste Ausrichtelement unbeweglich angeordnet sind. Bei dem mindestens einen ersten Ausrichtelement handelt es sich vorzugsweise um ein rein mechanisches Bauteil, durch das die Ausrichtung der Steckeinheit rein mechanisch erfolgen kann, nachdem die Steckeinheit mithilfe einer Sensorik bereits grob gegenüber dem zweiten Steckelement positioniert wurde. Das mindestens eine erste Ausrichtelement wird dafür vorzugsweise mit mindestens einem seitens des zweiten Steckelements angeordneten zweiten Ausrichtelement in eine mechanische Wirkverbindung gebracht.

Vorzugsweise sind die erste Achse und die zweite Achse sowie die zweite Achse und die dritte Achse jeweils senkrecht zueinander angeordnet. Dadurch kann die Steckeinheit in der von der ersten Achse und der zweiten Achse aufgespannten Ebene vorzugsweise in jeder Richtung verschoben werden. Außerdem kann durch eine derartige Anordnung die Steckeinheit in jeder Richtung im Raum rotiert werden.

Besonders bevorzugt sind die dritte Achse und die Steckachse parallel zueinander angeordnet. Hier und im Folgenden wird der Ausdruck "parallel" so verstanden, dass er das Aufeinanderliegen zweier Achsen einschließt. Durch die drehbare Lagerung um die dritte Achse kann die Steckeinheit mit einer derartigen Anordnung um die Steckachse rotatorisch ausgerichtet werden. Zusammen mit der zuvor beschriebenen senkrechten Anordnung der ersten Achse und der zweiten Achse sowie der zweiten Achse und der dritten Achse zueinander, kann die Steckeinheit außerdem quer zur Steckrichtung ausgerichtet werden. Vorzugsweise ist die Steckeinheit entlang der dritten Achse unverschieblich gelagert. Mit der bevorzugten parallelen Anordnung der dritten Achse und der Steckachse kann etwaiger Versatz entlang der dritten Achse damit durch den Steckvorgang selbst ausgeglichen werden.

In einer bevorzugten Ausführungsform der Erfindung ist die dritte Lagereinheit zusammen mit der Steckeinheit um die zweite Achse drehbar und entlang der zweiten Achse verschiebbar gelagert, und die zweite Lagereinheit zusammen mit der dritten Lagereinheit um die erste Achse drehbar und entlang der ersten Achse verschiebbar gelagert. Dies kann einen kompakten und robusten Aufbau der Steckvorrichtung ermöglichen. Insbesondere hinsichtlich der rotatorischen Lagerung kann das bei der Steckvorrichtung angewandte Lagerungsprinzip einer kardanischen Lagerung entsprechen. Die Lagerung bezüglich der zweiten Achse erfolgt dabei vorzugsweise mittels der zweiten Lagereinheit. Die Lagerung bezüglich der ersten Achse erfolgt dabei vorzugsweise mittels der ersten Lagereinheit.

Vorzugsweise weist die Steckvorrichtung zwei Käfige auf, einen als Teil der zweiten Lagereinheit und einen weiteren als Teil der dritten Lagereinheit. Die erste Lagereinheit umfasst typischerweise keinen Käfig. Zur besseren Übersichtlichkeit und um deren Benennung zu vereinfachen, wird bevorzugt der der zweiten Lagereinheit zugehörige Käfig als zweiter Käfig und der der dritten Lagereinheit zugehörige Käfig als dritter Käfig bezeichnet - vorzugsweise ohne dass ein erster Käfig vorhanden ist.

Die erste Lagereinheit umfasst vorzugsweise zwei entlang der ersten Achse ausgerichtete erste Lagerstifte. Die zweite Lagereinheit umfasst vorzugsweise zwei entlang der zweiten Achse ausgerichtete zweite Lagerstifte sowie einen zweiten Käfig. Der zweite Käfig kann in Bezug auf die erste Achse axial und rotatorisch beweglich an den ersten Lagerstiften angeordnet sein. Dadurch kann die rotatorische und translatorische Beweglichkeit der Steckeinheit bezüglich der ersten Achse erreicht werden. Die zweiten Lagerstifte sind vorzugsweise fest an dem zweiten Käfig angeordnet. Die dritte Lagereinheit umfasst vorzugsweise einen dritten Käfig. Der dritte Käfig ist vorzugsweise innerhalb des zweiten Käfigs angeordnet. Mittels der zweiten Lagerstifte kann der dritte Käfig an dem zweiten Käfig angeordnet sein. Der dritte Käfig kann in Bezug auf die zweite Achse axial und rotatorisch beweglich an den zweiten Lagerstiften angeordnet sein. Dadurch kann die rotatorische und translatorische Beweglichkeit der Steckeinheit bezüglich der zweiten Achse erreicht werden. Die Steckeinheit ist vorzugsweise mittels eines Gleitlagers in dem dritten Käfig angeordnet. Damit kann die Steckeinheit von dem Lagermodul umgeben in der Steckvorrichtung angeordnet sein. Das Gleitlager kann derart ausgebildet sein, dass es eine rotatorische Bewegung der Steckeinheit um die dritte Achse zulässt. Das Gleitlager kann durch die einander zugewandten Oberflächen des dritten Käfigs und der Steckeinheit gebildet sein. Vorzugsweise sind der zweite Käfig und der dritte Käfig ringförmig ausgebildet. Mittels der ersten Lagerstifte kann das Lagermodul und damit auch die Steckeinheit gegenüber der übrigen Steckvorrichtung gelagert sein.

In einer bevorzugten Ausführungsform der Erfindung ist die Steckeinheit entlang der ersten Achse und/oder entlang der zweiten Achse federnd gelagert. Dadurch kann sich die Steckeinheit bei nicht gestecktem erstem Steckelement selbsttätig stets in derselben translatorischen Position bezüglich der ersten Achse und/oder der zweiten Achse anordnen. Dies kann insbesondere bei der groben Positionierung der Steckeinheit von Vorteil sein. Zur federnden Lagerung der Steckeinheit entlang der ersten Achse können die beiden ersten Lagerstifte jeweils eine erste Schraubenfeder aufweisen, die entlang der ersten Achse einander entgegenwirkend angeordnet sind, sodass bei identischen ersten Schraubenfedern die Steckeinheit mittig zwischen den beiden ersten Lagerstiften ausgerichtet wird. Bevorzugt sind die ersten Schraubenfedern um die ersten Lagerstifte angeordnet und stützen sich einerseits an einer auf dem jeweiligen ersten Lagerstift angeordneten Wellenschulter und andererseits an dem zweiten Käfig ab. Zur federnden Lagerung der Steckeinheit entlang der zweiten Achse können die beiden zweiten Lagerstifte jeweils eine zweite Schraubenfeder aufweisen, die entlang der zweiten Achse einander entgegenwirkend angeordnet sind, sodass bei identischen zweiten Schraubenfedern die Steckeinheit mittig zwischen den beiden zweiten Lagerstiften und damit bevorzugt mittig in dem zweiten Käfig ausgerichtet wird. Besonders bevorzugt sind die zweiten Schraubenfedern zwischen dem zweiten Käfig und dem dritten Käfig um die zweiten Lagerstifte angeordnet und können sich damit einerseits an dem zweiten Käfig und andererseits an dem dritten Käfig abstützen.

Die Steckeinheit kann um die dritte Achse federnd gelagert sein. Dadurch kann sich die Steckeinheit bei nicht gestecktem erstem Steckelement selbsttätig stets in derselben rotatorischen Position bezüglich der dritten Achse anordnen. Dies kann insbesondere bei der groben Positionierung der Steckeinheit von Vorteil sein. Zur federnden Lagerung der Steckeinheit um die dritte Achse kann die Steckvorrichtung mindestens ein sich einerseits an der Steckeinheit und andererseits an dem dritten Käfig abstützendes Federelement aufweisen. Insbesondere kann der dritte Käfig zwei einander gegenüberliegende Vorsprünge aufweisen, die jeweils in einer Aussparung des Grundkörpers angeordnet sein können. In jeder der Aussparungen können zwei Federelemente einander entgegenwirkend zwischen dem Vorsprung und dem Grundkörper angeordnet sein.

In einer bevorzugten Ausführungsform der Erfindung schneiden sich die erste Achse, die zweite Achse und die dritte Achse in einem Achsenschnittpunkt. Dadurch kann insbesondere die Steckeinheit besonders flexibel beweglich angeordnet werden. Auch können damit die auf die Steckeinheit wirkenden Kräfte, die beispielsweise durch einen Steckeinheitsschwerpunkt der Steckeinheit verursacht werden, besonders einfach berechnet werden.

Vorzugsweise ist der Steckeinheitsschwerpunkt der Steckeinheit auf der dritten Achse entgegen der Steckrichtung entfernt von dem Achsenschnittpunkt angeordnet. Insbesondere bei symmetrischer Ausbildung und Anordnung der übrigen mittels der ersten Lagereinheit gelagerten Komponenten der Steckvorrichtung, insbesondere des zweiten und dritten Käfigs, kann damit eine selbsttätige horizontale Orientierung der Steckeinheit erreicht werden. Dies kann vor allem dann von Vorteil sein, wenn die Steckvorrichtung ausgebildet ist, um das Steckelement in vertikaler Richtung von unten nach oben zu stecken.

Ferner kann an der Steckeinheit ein Kraftangriffspunkt zur Orientierung der Steckeinheit angeordnet sein. Der Kraftangriffspunkt bezeichnet vorzugsweise einen Angriffspunkt für eine von außerhalb der Steckeinheit auf die Steckeinheit wirkende und deshalb externe Kraft. Bevorzugt ist der Kraftangriffspunkt auf einer Rückseite der Steckeinheit angeordnet. Als Rückseite wird hier und im Folgenden vorzugsweise die Seite der Steckeinheit bezeichnet, die gegenüber der durch das Steckelement definierte zum Stecken vorgesehenen Seite der Steckeinheit angeordnet und entgegen der Steckrichtung ausgerichtet ist. An dem Kraftangriffspunkt kann ein Zugelement, wie eine Zugfeder oder ein Seilzug mit einem Orientierungsfederelement angeordnet sein, wobei das Zugelement vorzugsweise jenseits der ersten Lagereinheit an einem Fixpunkt angeordnet ist. Der Kraftangriffspunkt ist vorzugsweise auf der dritten Achse liegend und entgegen der Steckrichtung entfernt von dem Achsenschnittpunkt angeordnet. Eine Zugrichtung des Zugelements weist vorzugsweise entgegen der Steckrichtung. Der Kraftangriffspunkt ermöglicht damit eine Orientierung der Steckeinheit unabhängig von deren Ausrichtung durch die Schwerkraft. Abhängig von der Zugrichtung kann damit eine anwendungsbezogene Orientierung der Steckeinheit eingestellt werden. Dies kann vor allem dann von Vorteil sein, wenn die Steckvorrichtung ausgebildet ist, um das Steckelement in horizontaler Richtung seitlich zu stecken. Auch bei einer vertikalen Steckrichtung kann die horizontale Orientierung des Steckelements beeinträchtigt sein, beispielsweise durch die durch einen zum Steckelement führenden Leitungsstrang auf die Steckeinheit wirkende Kraft. In diesem Fall kann das Vorsehen eines Kraftangriffspunkts und eines Zugelements ebenfalls vorteilhaft sein.

Während, wie vorstehend erläutert, durch die Anordnung des Steckeinheitsschwerpunkts oder durch das vorsehen des Kraftangriffspunkts die grundsätzliche Orientierung der Steckeinheit eingestellt werden kann, dient das mindestens eine erste Ausrichtelement insbesondere der Feinausrichtung des ersten Steckelements zu dem zweiten Steckelement. Das mindestens eine erste Ausrichtelement kann in der Steckrichtung über das erste Steckelement hinausragend angeordnet sein. Dadurch kann das mindestens eine erste Ausrichtelement mit dem mindestens einen zweiten Ausrichtelement in Kontakt treten, bevor das erste Steckelement mit dem zweiten Steckelement in Kontakt tritt, also vor dem eigentlichen Steckvorgang. Damit kann nach der groben Positionierung zwischen dem ersten Steckelement und dem zweiten Steckelement bestehender translatorischer und/oder rotatorischer Versatz ausgeglichen werden. Vorzugsweise ist das mindestens eine erste Ausrichtelement als parallel zur Steckachse angeordneter Zentrierstift ausgebildet, der besonders bevorzugt an dem in Steckrichtung weisenden Ende einen Einführkonus aufweist.

In einer bevorzugten Ausführungsform der Erfindung weist die Steckeinheit zwei erste Ausrichtelemente auf. Dies kann ein gleichmäßigeres Ausrichten der Steckeinheit bewirken und ein Verkanten des mindestens einen ersten Ausrichtelements mit dem mindestens einen zweiten Ausrichtelement vermeiden. Insbesondere kann die rotatorische Ausrichtung der Steckeinheit um die dritte Achse erleichtern. Besonders bevorzugt weisen die beiden ersten Ausrichtelemente bezüglich der Steckachse einen Versatz von 180° auf.

In einer Weiterbildung der Erfindung umfasst die Steckvorrichtung eine Verschiebeeinheit, an der das Lagermodul angeordnet ist. Die Verschiebeeinheit kann insbesondere dazu dienen, die Steckeinheit zumindest anteilig entlang der Steckachse zu verschieben. Vorzugsweise ist das Lagermodul mittels der ersten Lagereinheit an der Verschiebeeinheit angeordnet. Die Steckeinheit kann damit mittels des Lagermoduls gegenüber der Verschiebeeinheit gelagert sein. Bevorzugt ist die Verschiebeeinheit als Scherenhubvorrichtung ausgebildet.

In einer Weiterbildung der Erfindung ist das erste Steckelement als Ladestecker oder Ladebuchse für ein elektrisch betriebenes Fahrzeug ausgebildet. Das zweite Steckelement kann entsprechend umgekehrt als Ladebuchse oder Ladestecker für ein elektrisch betriebenes Fahrzeug ausgebildet sein. Als Beispiele für elektrisch betriebene Fahrzeuge seien Personenkraftwagen einschließlich Busse, Lastkraftwagen, Flurförderzeuge oder landwirtschaftliche Maschinen genannt.

Ein erfindungsgemäßes Stecksystem umfasst die zuvor beschriebene Steckvorrichtung sowie eine Steckelementaufnahme, wobei die Steckelementaufnahme das zweite Steckelement und das mindestens eine zweite Ausrichtelement aufweist, die derart angeordnet sind, dass sie mit der Steckeinheit koppelbar sind. Vorzugsweise sind die zweiten Ausrichtelemente rohrförmig ausgebildet. Im gekoppelten Zustand weist die Steckeinheit gegenüber der Steckelementaufnahme vorzugsweise nur einen verbleibenden Freiheitsgrad auf, nämlich einen translatorischen entlang der Steckachse. Vorzugsweise entsprechen dafür das zweite Steckelement und das mindestens eine zweite Ausrichtelement in Anordnung und Anzahl dem ersten Steckelement und dem mindestens einen ersten Ausrichtelement.

Ein erfindungsgemäßer Roboter umfasst eine zuvor beschriebene Steckvorrichtung, wobei die Steckvorrichtung mittels des Roboters positionierbar ist. Damit kann das Stecken automatisiert und hochgenau erfolgen, ohne dass dafür teure und/oder hochauflösende Sensorik zum Einsatz kommt. Vorzugsweise weist der Roboter Sensorik zum groben Positionieren der Steckeinheit auf. Insbesondere bei Systemen, die im Wesentlichen eine vertikale Steckrichtung aufweisen, kann der Roboter dazu ausgebildet sein, die Steckvorrichtung am Boden zu verfahren. Darüber hinaus kann die Verschiebeeinheit durch einen Roboterarm des Roboters gebildet sein. Dadurch kann automatisiertes Stecken unabhängig von der Steckrichtung realisiert werden. Der Roboterarm kann allein oder in Kombination mit einem fahrenden System verwendet werden.

Ein Ausführungsbeispiel der Erfindung wird anhand der nachfolgenden Figuren erläutert. Es zeigt:
- Figur 1: eine perspektivische Darstellung eines ersten Ausführungsbeispiels einer Steckvorrichtung,
- Figur 2: eine Draufsicht des in Fig. 1 gezeigten Ausführungsbeispiels,
- Figur 3: eine perspektivische Darstellung eines zweiten Ausführungsbeispiels einer Steckvorrichtung,
- Figur 4: eine Seitenansicht des in Fig. 3 gezeigten Ausführungsbeispiels,
- Figur 5: eine Seitenansicht eines dritten Ausführungsbeispiels einer Steckvorrichtung,
- Figur 6: eine perspektivische Darstellung eines Ausführungsbeispiels einer Steckelementaufnahme,
- Figur 7: eine Draufsicht des in Fig. 6 gezeigten Ausführungsbeispiels.

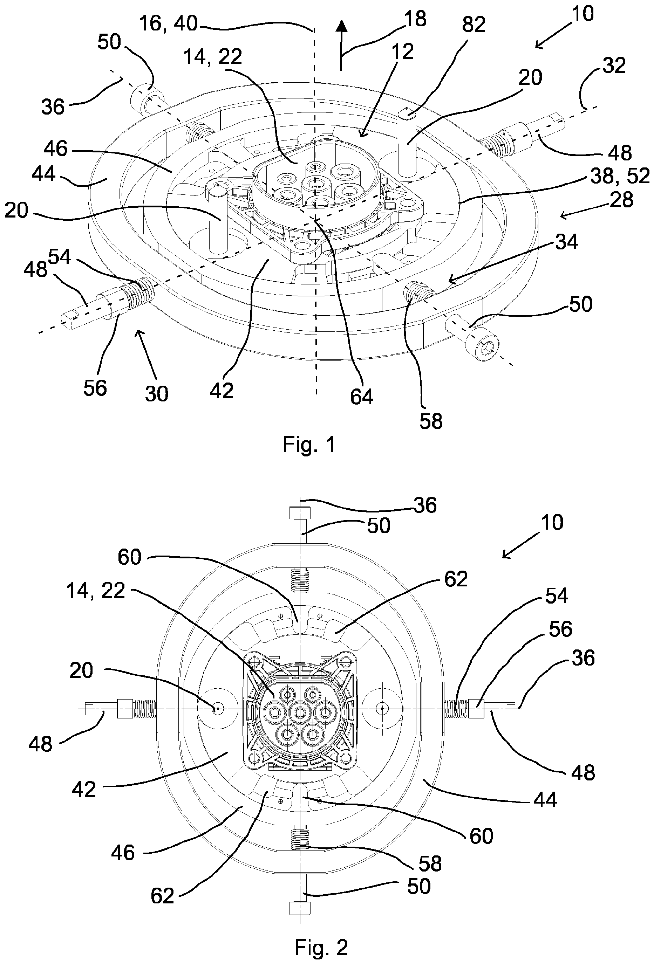

Die Figuren 1 bis 7 zeigen verschiedene Ansichten verschiedener Ausführungsbeispiele. Der Übersichtlichkeit halber werden nicht alle Bezugszeichen in jeder Figur verwendet. Für gleiche und funktionsgleiche Teile werden die gleichen Bezugszeichen verwendet.

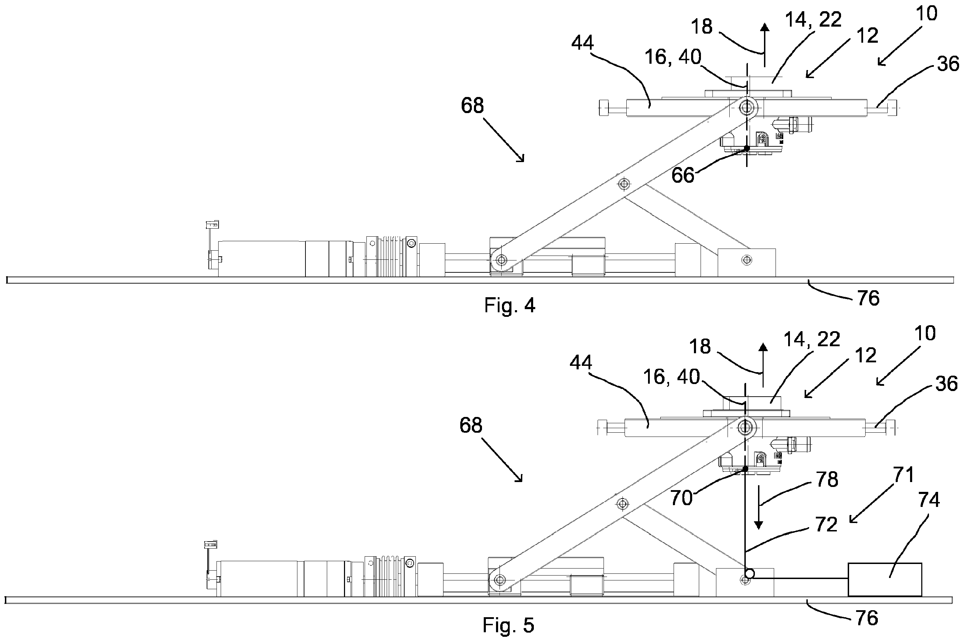

Fig. 1 zeigt ein erstes Ausführungsbeispiel einer Steckvorrichtung 10 mit einer Steckeinheit 12, die ein erstes Steckelement 14 mit einer Steckachse 16 und einer Steckrichtung 18 sowie zwei erste Ausrichtelemente 20 (in Fig. 4 u. 5 nicht dargestellt) aufweist. Die beiden ersten Ausrichtelemente 20 weisen bezüglich der Steckachse 16 einen Versatz von 180° auf. Das erste Steckelement 14 ist als Ladestecker 22 für ein elektrisch betriebenes Fahrzeug ausgebildet.

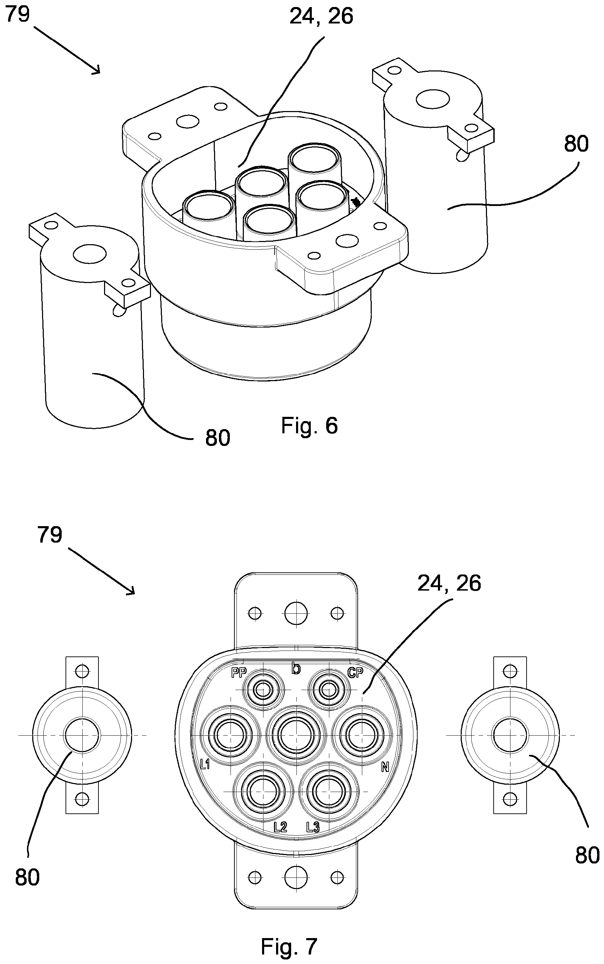

Die Steckrichtung 18 beschreibt die Richtung der Steckachse 16, in die das erste Steckelement 14 zum Stecken, also zum Herstellen einer Verbindung mit einem zweiten Steckelement 24, bewegt wird. Ein Ausführungsbeispiel des zweiten Steckelements 24, das entsprechend als entsprechende Ladebuchse 26 für ein elektrisch betriebenes Fahrzeug ausgebildet ist, ist in Fig. 6 u. 7 gezeigt.

Die in Fig. 1 gezeigte Steckvorrichtung weist ferner ein Lagermodul 28 auf, umfassend eine erste Lagereinheit 30, mittels der die Steckeinheit 12 um eine erste Achse 32 drehbar und entlang der ersten Achse 32 verschiebbar gelagert ist, eine zweite Lagereinheit 34, mittels der die Steckeinheit 12 um eine zweite Achse 36 drehbar und entlang der zweiten Achse 36 verschiebbar gelagert ist, sowie eine dritte Lagereinheit 38, mittels der die Steckeinheit 12 um eine dritte Achse 40 drehbar gelagert ist. Die ersten Ausrichtelemente 20 sind über einen Grundkörper 42 der Steckeinheit unbeweglich mit dem ersten Steckelement 12 verbunden.

Die erste Achse 32 und die zweite Achse 36 sowie die zweite Achse 36 und die dritte Achse 40 sind jeweils senkrecht zueinander angeordnet. Dadurch kann die Steckeinheit 12 in der von der ersten Achse 32 und der zweiten Achse 36 aufgespannten Ebene vorzugsweise in jeder Richtung verschoben werden. Außerdem kann durch eine derartige Anordnung die Steckeinheit 12 in jeder Richtung im Raum rotiert werden.

Wie aus der Darstellung in Fig. 1 hervorgeht, liegen die dritte Achse 40 und die Steckachse 16 aufeinander und sind damit parallel zueinander angeordnet. Durch die drehbare Lagerung um die dritte Achse 40 kann die Steckeinheit 12 mit einer derartigen Anordnung um die Steckachse 16 rotatorisch ausgerichtet werden. Zusammen mit der zuvor beschriebenen senkrechten Anordnung der ersten Achse 32 und der zweiten Achse 36 sowie der zweiten Achse 36 und der dritten Achse 40 zueinander, kann die Steckeinheit 12 außerdem quer zur Steckrichtung 18 ausgerichtet werden. Entlang der dritten Achse 40 ist die Steckeinheit 12 unverschieblich gelagert. Dadurch, dass die dritte Achse 40 auf der Steckachse 16 liegt kann etwaiger Versatz entlang der dritten Achse 40 durch den Steckvorgang selbst ausgeglichen werden.

Die dritte Lagereinheit 38 ist zusammen mit der Steckeinheit 12 um die zweite Achse 36 drehbar und entlang der zweiten Achse 36 verschiebbar gelagert, und die zweite Lagereinheit 34 ist zusammen mit der dritten Lagereinheit 38 um die erste Achse 32 drehbar und entlang der ersten Achse 32 verschiebbar gelagert. Hinsichtlich der rotatorischen Lagerung entspricht das bei der Steckvorrichtung 12 angewandte Lagerungsprinzip damit einer kardanischen Lagerung. Die Lagerung bezüglich der zweiten Achse 36 erfolgt dabei mittels der zweiten Lagereinheit 34. Die Lagerung bezüglich der ersten Achse 32 erfolgt dabei mittels der ersten Lagereinheit 30.

Die Steckvorrichtung 10 weist zwei ringförmig ausgebildete Käfige 44, 46 auf: Einen zweiten Käfig 44 als Teil der zweiten Lagereinheit 34 und einen dritten Käfig 46 als Teil der dritten Lagereinheit 38. Die erste Lagereinheit 30 umfasst keinen Käfig.

Die zweite Lagereinheit 34 umfasst ferner zwei entlang der zweiten Achse 36 ausgerichtete zweite Lagerstifte 50. Die erste Lagereinheit 30 umfasst zwei entlang der ersten Achse 32 ausgerichtete erste Lagerstifte 48. Wie insbesondere aus Fig. 2 ersichtlich ist, ist der zweite Käfig 44 ist in Bezug auf die erste Achse 32 axial und rotatorisch beweglich an den ersten Lagerstiften 48 angeordnet. Dadurch wird die rotatorische und translatorische Beweglichkeit der Steckeinheit 12 bezüglich der ersten Achse 32 erreicht. Die zweiten Lagerstifte 50 sind fest an dem zweiten Käfig 44 angeordnet.

Der dritte Käfig 46 ist mittels der zweiten Lagerstifte 50 bezüglich der zweiten Achse axial und rotatorisch beweglich innerhalb des zweiten Käfigs 44 angeordnet. Dadurch wird die rotatorische und translatorische Beweglichkeit der Steckeinheit 12 bezüglich der zweiten Achse 36 erreicht. In dem dritten Käfig ist die Steckeinheit 12 mittels eines Gleitlagers 52 angeordnet. Damit ist die Steckeinheit 12 von dem Lagermodul 28 umgeben in der Steckvorrichtung angeordnet. Das Gleitlager 52 ist derart ausgebildet, dass es eine rotatorische Bewegung der Steckeinheit 12 um die dritte Achse 40 zulässt. Das Gleitlager wird dabei durch die einander zugewandten Oberflächen des dritten Käfigs 46 und der Steckeinheit 12 gebildet.

Entlang der ersten Achse 32 und der zweiten Achse 36 ist die Steckeinheit 12 federnd gelagert. Dadurch kann sich die Steckeinheit 12 bei nicht gestecktem erstem Steckelement 14 selbsttätig stets in derselben translatorischen Position bezüglich der ersten Achse 32 und der zweiten Achse 36 anordnen. Zur federnden Lagerung der Steckeinheit 12 entlang der ersten Achse 32 weisen die beiden ersten Lagerstifte 48 jeweils eine erste Schraubenfeder 54 auf, die entlang der ersten Achse 32 einander entgegenwirkend angeordnet sind, sodass bei identischen ersten Schraubenfedern 54 die Steckeinheit 12 mittig zwischen den beiden ersten Lagerstiften 48 ausgerichtet wird (siehe insbesondere Fig. 1 u. 2). Die ersten Schraubenfedern 54 sind um die ersten Lagerstifte 48 angeordnet und stützen sich einerseits an einer auf dem jeweiligen ersten Lagerstift 48 angeordneten Wellenschulter 56 und andererseits an dem zweiten Käfig 44 ab.

Zur federnden Lagerung der Steckeinheit 12 entlang der zweiten Achse können die beiden zweiten Lagerstifte 50 jeweils eine zweite Schraubenfeder 58 aufweisen, die entlang der zweiten Achse 36 einander entgegenwirkend angeordnet sind, sodass bei identischen zweiten Schraubenfedern 58 die Steckeinheit 12 mittig zwischen den beiden zweiten Lagerstiften 50 und damit mittig in dem zweiten Käfig 44 ausgerichtet wird. Die zweiten Schraubenfedern 58 sind zwischen dem zweiten Käfig 44 und dem dritten Käfig 46 um die zweiten Lagerstifte 50 angeordnet und können sich damit einerseits an dem zweiten Käfig 44 und andererseits an dem dritten Käfig 46 abstützen.

Die Steckeinheit 12 ist außerdem um die dritte Achse 40 federnd gelagert. Dadurch kann sich die Steckeinheit 12 bei nicht gestecktem erstem Steckelement 14 selbsttätig stets in derselben rotatorischen Position bezüglich der dritten Achse 40 anordnen. Zur federnden Lagerung der Steckeinheit 12 um die dritte Achse 40 kann die Steckvorrichtung 10 sich einerseits an der Steckeinheit 12 und andererseits an dem dritten Käfig 46 abstützende, nicht dargestellte Federelemente aufweisen. Dazu weist der dritte Käfig 46 zwei einander gegenüberliegende Vorsprünge 60 auf, die jeweils in einer Aussparung 62 des Grundkörpers 42 angeordnet sind. In jeder der Aussparungen 62 können zwei Federelemente einander entgegenwirkend zwischen dem Vorsprung 60 und dem Grundkörper 42 angeordnet sein.

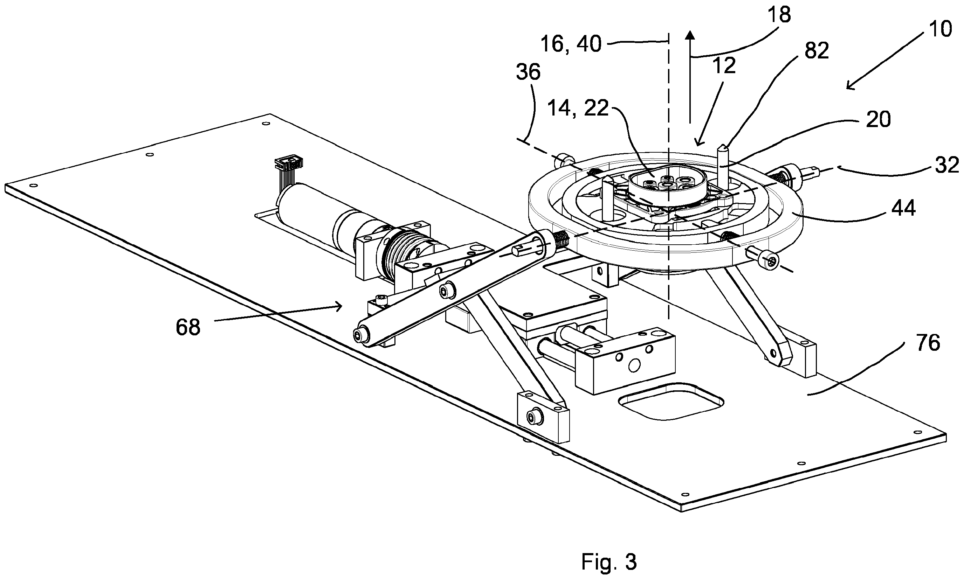

Das zweite in Fig. 3 u. 4 dargestellte Ausführungsbeispiel unterscheidet sich von dem in Fig. 1 u. 2 dargestellten Ausführungsbeispiel darin, dass es eine Verschiebeeinheit 68 aufweist. Die Steckeinheit 12 und das Lagermodul 28 sind in den beiden Ausführungsbeispielen identisch.

Die erste Achse 32, die zweite Achse 36 und die dritte Achse 40 schneiden sich in einem Achsenschnittpunkt 64. In den in Fig. 1 bis 3 dargestellten Ausführungsbeispielen ist ein Steckeinheitsschwerpunkt 66 der Steckeinheit 12 auf der dritten Achse 40 entgegen der Steckrichtung 18 entfernt von dem Achsenschnittpunkt 64 angeordnet. Damit kann eine selbsttätige horizontale Orientierung der Steckeinheit 12 erreicht werden.

Das in Fig. 5 dargestellte dritte Ausführungsbeispiel unterscheidet sich von dem in Fig. 3 u. 4 dargestellten zweiten Ausführungsbeispiel darin, dass an der Steckeinheit 12 ein Kraftangriffspunkt 70 zur Orientierung der Steckeinheit 12 angeordnet ist. Der Kraftangriffspunkt 70 ist auf einer Rückseite der Steckeinheit 12 angeordnet. An dem Kraftangriffspunkt 12 ist ein Zugelement 71, umfassend einen Seilzug 72 mit einem Orientierungsfederelement 74, angeordnet, wobei das Zugelement 71 jenseits der ersten Lagereinheit 30 an einer Bodenplatte 76 und damit an einem Fixpunkt jenseits der ersten Lagereinheit 30 angeordnet ist. Der Kraftangriffspunkt 70 ist auf der dritten Achse 40 liegend und entgegen der Steckrichtung 18 entfernt von dem Achsenschnittpunkt 64 angeordnet. Eine Zugrichtung 78 des Zugelements 71 weist entgegen der Steckrichtung 18. Abhängig von der Zugrichtung 78 kann damit eine anwendungsbezogene Orientierung der Steckeinheit 12 eingestellt werden.

Während durch die Anordnung des Steckeinheitsschwerpunkts 66 (erstes und zweites Ausführungsbeispiel, Fig. 1-4) oder durch das vorsehen des Kraftangriffspunkts 70 (drittes Ausführungsbeispiel, Fig. 5) die grundsätzliche Orientierung der Steckeinheit 12 eingestellt werden kann, dienen die ersten Ausrichtelemente 20 insbesondere der Feinausrichtung des ersten Steckelements 14 zu dem zweiten Steckelement 24.

Ein Stecksystem umfasst neben der Steckvorrichtung eine in Fig. 6 u. 7 dargestellte Steckelementaufnahme 79, die das zweite Steckelement 24 und zwei zweite Ausrichtelemente 80 aufweist. Die zweiten Ausrichtelemente 80 sind derart angeordnet, dass sie mit den ersten Ausrichtelementen 20 koppelbar sind.

Wie insbesondere in Fig. 1 zu erkennen ist, sind die ersten Ausrichtelemente 20 in der Steckrichtung 18 über das erste Steckelement 14 hinausragend angeordnet. Dadurch können die ersten Ausrichtelemente 20 mit den zweiten Ausrichtelementen 80 in Kontakt treten, bevor das erste Steckelement 14 mit dem zweiten Steckelement 24 in Kontakt tritt, also vor dem eigentlichen Steckvorgang. Die ersten Ausrichtelemente 20 sind als parallel zur Steckachse 16 angeordnete Zentrierstifte ausgebildet, die an dem in Steckrichtung 18 weisenden Ende jeweils einen Einführkonus 82 aufweisen. Die zweiten Ausrichtelemente 80 sind rohrförmig ausgebildet. Im gekoppelten Zustand weist die Steckeinheit 12 gegenüber der Steckelementaufnahme 79 damit nur einen verbleibenden Freiheitsgrad auf, nämlich einen translatorischen entlang der Steckachse 16.

In dem zweiten und dritten Ausführungsbeispiel (Fig. 3-5) umfasst die Steckvorrichtung 10 die Verschiebeeinheit 68, an der das Lagermodul 28 angeordnet ist. Die Verschiebeeinheit 68 dient dazu, die Steckeinheit 12 zumindest anteilig entlang der Steckachse 16 zu verschieben. Das Lagermodul 28 ist mittels der ersten Lagerstifte 48 der ersten Lagereinheit 30 an der Verschiebeeinheit 68 angeordnet, sodass die Steckeinheit 12 mittels des Lagermoduls 28 gegenüber der Verschiebeeinheit 68 gelagert sein. Die Verschiebeeinheit 68 ist als Scherenhubvorrichtung ausgebildet.

### Bezugszeichenliste

- 10: Steckvorrichtung
- 12: Steckeinheit
- 14: erstes Steckelement
- 16: Steckachse
- 18: Steckrichtung
- 20: erstes Ausrichtelement
- 22: Ladestecker
- 24: zweites Steckelement
- 26: Ladebuchse
- 28: Lagermodul
- 30: erste Lagereinheit
- 32: erste Achse
- 34: zweite Lagereinheit
- 36: zweite Achse
- 38: dritte Lagereinheit
- 40: dritte Achse
- 42: Grundkörper
- 44: zweiter Käfig
- 46: dritter Käfig
- 48: erster Lagerstift
- 50: zweiter Lagerstift
- 52: Gleitlager
- 54: erste Schraubenfeder
- 56: Wellenschulter
- 58: zweite Schraubenfeder
- 60: Vorsprung
- 62: Aussparung
- 64: Achsenschnittpunkt
- 66: Steckeinheitsschwerpunkt
- 68: Verschiebeeinheit
- 70: Kraftangriffspunkt
- 71: Zugelement
- 72: Seilzug
- 74: Orientierungsfederelement
- 76: Bodenplatte
- 78: Zugrichtung
- 79: Steckelementaufnahme
- 80: zweites Ausrichtelement
- 82: Einführkonus

## Patentansprüche

1. Steckvorrichtung (10) mit folgenden Merkmalen:
• einer Steckeinheit (12) umfassend
∘ ein erstes Steckelement (14) mit einer Steckachse (16) und einer Steckrichtung (18),
∘ mindestens ein erstes Ausrichtelement (20),
• ein Lagermodul (28) umfassend
∘ eine erste Lagereinheit(30), mittels der die Steckeinheit (12) um eine erste Achse (32) drehbar und entlang der ersten Achse (32) verschiebbar gelagert ist,
∘ eine zweite Lagereinheit (34), mittels der die Steckeinheit (12) um eine zweite Achse (36) drehbar und entlang der zweiten Achse (36) verschiebbar gelagert ist, sowie
∘ eine dritte Lagereinheit (38), mittels der die Steckeinheit (12) um eine dritte Achse (40) drehbar gelagert ist.

2. Steckvorrichtung nach Anspruch 1,
**dadurch gekennzeichnet, dass**
die erste Achse (32) und die zweite Achse (36) sowie die zweite Achse (36) und die dritte Achse (40) jeweils senkrecht zueinander angeordnet sind.

3. Steckvorrichtung nach einem der vorhergehenden Ansprüche,
**dadurch gekennzeichnet, dass**
die dritte Achse (40) und die Steckachse (16) parallel zueinander angeordnet sind.

4. Steckvorrichtung nach einem der vorhergehenden Ansprüche,
**dadurch gekennzeichnet, dass**
die dritte Lagereinheit (38) zusammen mit der Steckeinheit (12) um die zweite Achse (36) drehbar und entlang der zweiten Achse (36) verschiebbar gelagert ist, und dass die zweite Lagereinheit (34) zusammen mit der dritten Lagereinheit (38) um die erste Achse (32) drehbar und entlang der ersten Achse (32) verschiebbar gelagert ist.

5. Steckvorrichtung nach einem der vorhergehenden Ansprüche,
**dadurch gekennzeichnet, dass**
die Steckeinheit (12) entlang der ersten Achse (32) und/oder entlang der zweiten Achse (36) federnd gelagert ist.

6. Steckvorrichtung nach einem der vorhergehenden Ansprüche,
**dadurch gekennzeichnet, dass**
die Steckeinheit (12) um die dritte Achse (40) federnd gelagert ist.

7. Steckvorrichtung nach einem der vorhergehenden Ansprüche,
**dadurch gekennzeichnet, dass**
sich die erste Achse (32), die zweite Achse (36) und die dritte Achse (40) in einem Achsenschnittpunkt (64) schneiden.

8. Steckvorrichtung nach Anspruch 7,
**dadurch gekennzeichnet, dass**
ein Steckeinheitsschwerpunkt (66) der Steckeinheit (12) auf der dritten Achse (40) entgegen der Steckrichtung (18) entfernt von dem Achsenschnittpunkt (64) angeordnet ist.

9. Steckvorrichtung nach einem der vorhergehenden Ansprüche,
**dadurch gekennzeichnet, dass**
an der Steckeinheit (12) ein Kraftangriffspunkt (70) zur Orientierung der Steckeinheit (12) angeordnet ist.

10. Steckvorrichtung nach einem der vorhergehenden Ansprüche,
**dadurch gekennzeichnet, dass**
das mindestens eine erste Ausrichtelement (20) in der Steckrichtung (18) über das erste Steckelement (14) hinausragend angeordnet ist.

11. Steckvorrichtung nach einem der vorhergehenden Ansprüche,
**dadurch gekennzeichnet, dass**
die Steckeinheit (12) zwei erste Ausrichtelemente (20) aufweist.

12. Steckvorrichtung nach einem der vorhergehenden Ansprüche,
**dadurch gekennzeichnet, dass**
die Steckvorrichtung (12) eine Verschiebeeinheit (68) umfasst, an der das Lagermodul (28) angeordnet ist.

13. Steckvorrichtung nach einem der vorhergehenden Ansprüche,
**dadurch gekennzeichnet, dass**
das erste Steckelement (14) als Ladestecker (22) oder Ladebuchse (26) für ein elektrisch betriebenes Fahrzeug ausgebildet ist.

14. Stecksystem mit einer Steckvorrichtung (10) nach einem der vorhergehenden Ansprüche und einer Steckelementaufnahme (79), wobei die Steckelementaufnahme (79) ein zweites Steckelement (24) und mindestens ein zweites Ausrichtelement (80) aufweist, die derart angeordnet sind, dass sie mit der Steckeinheit (12) koppelbar sind.

15. Roboter mit einer Steckvorrichtung (10) nach einem der Ansprüche 1 bis 13, wobei die Steckvorrichtung (10) mittels des Roboters positionierbar ist.
